(19) Europäisches Patentamt
European Patent Office
Office européen des brevets

(11) **EP 1 764 592 A1**

(12) **EUROPEAN PATENT APPLICATION**
published in accordance with Art. 158(3) EPC

(43) Date of publication:
**21.03.2007 Bulletin 2007/12**

(51) Int Cl.:
***G01G 19/387*** (2006.01)

(21) Application number: **04746891.3**

(22) Date of filing: **02.07.2004**

(86) International application number:
**PCT/JP2004/009422**

(87) International publication number:
**WO 2006/003706 (12.01.2006 Gazette 2006/02)**

(84) Designated Contracting States:
**AT BE BG CH CY CZ DE DK EE ES FI FR GB GR HU IE IT LI LU MC NL PL PT RO SE SI SK TR**

(71) Applicant: **Plus One Techno & Co., Ltd.**
**Yahatanishi-ku, Kitakyushu-shi**
**Fukuoka, 8070821 (JP)**

(72) Inventor: **NOUMI, Kenji;**
**Kitakyushu-shi, Fukuoka**
**8050067 (JP)**

(74) Representative: **Hössle, Markus et al**
**Hössle Kudlek & Partner**
**Patentanwälte**
**Postfach 10 23 38**
**70019 Stuttgart (DE)**

(54) **COMBINED WEIGHING APPARATUS**

(57) Provided is a combinational weighing technique which can successfully improve a precision of a combinational weighing or a combinational counting of a weighed article. In a selecting step, since at least one large input weighing device is selected without any exception, therefore a target weight value is substantially reduced. This allows an equally dividing operation over the reduced target weight by two small input weighing devices to be performed. Consequently, the precision in the combinational weighing of corn flakes or the combinational counting of tablets can be improved.

FIG. 1

## Description

### FIELD OF THE INVENTION

The present invention relates to a combinational weighing technique and, more specifically, to a combinational weighing technique allowing for selecting a combination of specific weighing devices from a plurality of weighing devices so that a total weight of weighed article supplied to the selected specific weighing devices among the plurality of weighing devices can yield an optimal weight and then collecting the quantity of weighed article contained in the weighing devices of selected combination.

### DESCRIPTION OF THE PRIOR ART

For example, a quantity of mixed flakes of dried seaweed, sesame seeds, dried fish and meats, dried vegetables and the like prepared to be sprinkled on cooked rice, referred to as "Furikake flakes", (which correspond to the weighed article in the above paragraph) packed in a small plastic bag is commercially available.
There are conventionally known combinational weighing apparatuses for the mixed flakes of foods or "Furikake flakes" installed in a packing system of the Furikake flakes, including, for example, a combinational weighing apparatus capable of performing a quick and accurate weighing of the Furikake flakes, as disclosed in the cited Patent Document 1. The combinational weighing apparatus is operable in such a manner that a combination of weighing devices is selected from a plurality of weighing devices so that a total weight of the Furikake flakes supplied to the selected weighing devices among the plurality of weighing devices can yield an optimal weight and the weighed article contained in the selected weighing devices are then collected together.
For example, when attempting to pack 30g (target weight value) of the Furikake flakes in a small bag, firstly a set of ten weighing devices each adapted to receive an equivalent amount of materials one another (hereafter, each referred to as an equivalent input weighing device) is prepared, in which nominal amount of 10g of Furikake flakes corresponding to one third of the target weight value 30g is to be introduced evenly into each one of the weighing devices. Secondly, nominal amount of 10g of the Furikake flakes is dispensed into each one of the equivalent input weighing devices by using a dispenser device. Subsequently, the quantity of Furikake flakes received in each one of the weighing devices is weighed, then a combination of the weighing devices that can yield a most proximal value to 100g is selected and the quantity of weighed article received in the weighing devices of selected combination are only permitted to drop out of the weighing devices for collection. After that, the quantity of collected Furikake flakes is introduced into the small bag, which is then sealed.

### List of Patent Documents

[Patent Document 1]

Japanese Patent Laid-open Publication No. H05-79889

### SUMMERY OF THE INVENTION

### Problem to be solved by the invention

However, the combinational weighing apparatus of the cited Patent Document 1 has been suffered from the following drawbacks.
Specifically, (1) in one example of the conventional practice for packing of 30g Furikake flakes, a set of ten equivalent input weighing devices, each expected to receive 10g or the part corresponding to the target weight value divided equally by three, has been employed. Each nominal amount of 10g of the Furikake flakes is dispensed into each one of the weighing devices by the dispenser device. It is to be noticed however that there could be an error (input error) seen in each input quantity. Assuming that the input error by each dispenser device spans a range of $\pm 10\%$, the resultant input quantity may vary from 9g to 11g, yielding a variation range of 2g (20%) at the largest. This has deteriorated the accuracy in the filling quantity of the Furikake flakes during the packing operation of the Furikake flakes.
An object of the present invention is to provide a combinational weighing method and an apparatus for the same method, which are adapted to successfully improve the accuracy in the combinational weighing of the weighed article.
Another object of the present invention is to provide a combinational counting method and an apparatus for the same method, which are adapted to successfully improve the accuracy in the combinational counting of the weighed article.

**Means to solve the problem**

An invention as defined in claim 1 provides a combinational weighing method comprising: a supplying step for supplying a weighed article to one or more large input weighing device(s) and a plurality of small input weighing devices, respectively, wherein each of the one or more large input weighing device(s) receives an input of the weighed article in such a quantity that a maximum input weight including a variation part in the input weight of the weighed article is smaller relative to a target weight value for combinational weighing and wherein each of the plurality of small input weighing devices receives an each input of the weighed article in such a quantity that an input weight is smaller than that of the weighed article to be introduced into the large input weighing device and also smaller than a value determined by subtracting the weight of the weighed article for the one or more large input weighing device(s) from the target weight value for the combinational weighing; a weighing step for weighing the input weighed article received in each of the large and the small input weighing devices by using themselves, respectively; a selecting step for selecting a combination of the weighing devices so that a total weight of the weighed article supplied into the selected ones among the plurality of small input weighing devices and the selected one(s) among the at least one large input weighing device, respectively, may yield an optimal weight that is most proximal to the target weight value; and a collecting step for collecting each specific quantity of the weighed article in the selected weighing devices together.

According to the invention as defined in claim 1, after the weighing of the weighed article by the large and the small input weighing devices having been carried out, the combination of the weighing devices is selected such that the total weight of the weighed article supplied to respective selected weighing devices can yield the optimal weight. In this step, at least one large input weighing device is selected without any exception. This means that the procedure is intended to reduce the target weight value by previously subtracting a large quantity of the weighed article from the target weight value. If the target weight value is reduced, the quantity of the weighed article subject to, for example, the equally dividing operation by using the plurality of small input weighing devices, could be reduced proportionally by just that much. If each of the weighing devices has the same level of weighing precision one another, more advantageously, the variation in the input weight of the weighed article could be smaller as compared to the case according to the conventional practice where the target weight value has been simply divided equally. Consequently, the precision of the combinational weighing of the weighed article can be improved.

The weighed article may employ, for example, tablets and capsules of drags and medicines. Additionally, the weighed article may employ shredded and dried seaweed, dried fish and meats, dried vegetables, grains, tea leaves, powdered articles, pasta, screws and nuts, seeds such as coffee beans and sesame seeds, Furikake flakes and the like. The target weight value for the combinational weighing refers to the weight of the weighed article to be a target for the combinational weighing of the weighed article to achieve.

The maximum input weight including the variation part in the input weight of the weighed article refers to a sum, $(a+(+b))$, determined by adding the input target weight value $(a)$ of the weighed article with a largest variation weight value $(+b)$ of the input weight variation range $(\pm b)$ of the weighed article based on the input error of the weighed article by the weighing device.

The structures of the large and the small input weighing devices are not limited. For example, the employed structure may comprise a weighing hopper and a load cell for weighing a weighed article received in the weighing hopper. In that case, a significant difference between the large and the small input weighing devices resides in the size of the weighing hopper.

One, two or three of the large input weighing device(s) may be used. Besides, two, three or more small input weighing devices may be used.

The manner by which the weighed article is supplied to the large and the small input weighing devices may not be limited. In one example, a pipe feeder or a vibrating feeder may be provided between a reservoir hopper of the weighed article and respective weighing devices, to which the weighed article is supplied, respectively.

The weight to be supplied to the small input weighing device is lighter than that to the large input weighing device and smaller than the value determined by subtracting the weight of the weighed article for the one or more large input weighing device(s) from the target weight value.

The weight of the weighed article of the large input weighing device(s) to be subtracted from the target weight value may vary depending on the number of large input weighing device(s) to be selected in the selecting step. Specifically, one, two, three or more large input weighing devices may be selected. For two or more large input weighing devices are selected, a total weight of the weighed article received in respective selected large input weighing devices must be such that the maximum input weight including the variation part in the input weight of the weighed article would not exceed the target weight value of the combinational weighing.

In the selecting step, either of one large input weighing device or two large input weighing devices along with a plurality of small input weighing devices may be selected. A specific combination of the weighing devices by which the total weight of the weighed article supplied to the selected weighing devices in combination can yield the optimal weight value may be selected.

The manner by which the weighed article received in respective selected weighing devices are collected together may employ, for example, collection by using a chute that allows the weighed material to fall by own weight for the collection, automated collection with a conveyer, manual collection by way of manual handling and the like method.

An invention as defined in claim 2 provides a combinational counting method comprising: a supplying step for supplying a weighed article to one or more large input weighing device(s) and a plurality of small input weighing devices, respectively, the weighed article being a solid material having a quantified weight, wherein each of the one or more large input weighing device(s) receives an input of the weighed article in such a quantity that a maximum input weight including a variation part in the input weight of the weighed article is smaller relative to a target weight value corresponding to a target number value in a combinational counting operation and wherein each of the plurality of small input weighing devices receives an each input of the weighed article in such a quantity that an input weight is smaller than that of the weighed article to be introduced into the large input weighing device and also smaller than a value determined by subtracting the weight of the weighed article for the one or more large input weighing device(s) from the target weight value; a weighing step for weighing the input weighed article received in each of the large and the small input weighing devices by using themselves, respectively; a selecting step for selecting a combination of the weighing devices so that a total weight of the weighed article supplied into the selected ones among the plurality of small input weighing devices and the selected one(s) among said at least one large input weighing device, respectively, may yield an optimal weight that is most proximal to the target weight value; and a collecting step for collecting each specific quantity of the weighed article in the selected weighing devices together to yield the target number of pieces of the weighed article.

According to the invention as defined in claim 2, after the weighing of the weighed article by the large and the small input weighing devices having been carried out, the combination of the weighing devices is selected such that the total weight of the weighed article supplied to respective selected weighing devices can yield the optimal weight.
In this step, a large quantity of weighed article weighed by the large input weighing device is selected as a part of the weighed article by the combinational weighing operation without any exception. This means that the procedure is intended to reduce the target weight value by previously subtracting a large quantity of the weighed article from the target weight value. If the target weight value is reduced, the quantity of the weighed article subject to, for example, the equally dividing operation by using the plurality of small input weighing devices, could be reduced proportionally by just that much. If each of the weighing devices has the same level of weighing precision one another, more advantageously, the variation in the input weight of the weighed article could be smaller as compared to the case according to the conventional practice where the target weight value has been simply divided equally. Consequently, the precision of the combinational counting of the weighed article can be improved.

The weighed article in solid form having a quantified weight may employ, for example, tablets and capsules of drags and medicines, screws and nuts and the like.
A detailed description will now be given on the quantity of the weighed article which cases the maximum input weight including the variation part of the input weight of the weighed article to be smaller relative to the target weight value corresponding to the target number value of the combinational counting. Taking now one exemplary case where the weight of the weighed article is 1g and the target number value is 10 pieces, the target weight value corresponding to the target number value of the combinational counting is 10g. Assuming that the variation in the input weight spans a range of $\pm 10\%$ and the input weight to the large input weighing device is 7g, the maximum input weight including the variation of the input weight of the weighed article is induced to be 7.7g.
Besides, the specific weight of the weighed article to be introduced into each small input weighing device may be 1g in one example, which is lighter than the weighed article weight of 7g that is introduced into the large input weighing device and also lighter than the weight of 3g determined by subtracting the weighed article weight of 7g representing that introduced into the large input weighing device from the target weight value 10g.

An invention as defined in claim 3 provides a combinational counting method in accordance with claim 2, in which each number of pieces of the weighed article to be introduced into the large input weighing device and the small input weighing device, respectively, is such a number which causes a maximum value of input error in the corresponding large or small input weighing device to be smaller than 1 (one piece) when the input error is expressed in the following equation of conversion by the number of pieces of the weighed article. $y=1/x$. In the equation, the "y" represents the number of pieces of the weighed article which causes a maximum value of input error in terms of percentage in the large or the small input weighing device is equal to 1 in the conversion by the number of pieces of the weighed article; and the "x" represents the input error of the weighed article in terms of percentage in the large or the small input weighing device.

According to the invention as defined in claim 3, to introduce the weighed article to the large and the small input weighing devices, the introduction of the weighed article is only permitted with the number of pieces which yields the maximum value of the input error smaller than 1 when the input error of the each weighing device is expressed in the conversion by the number of pieces of the weighed article. This prevents any errors by the weighing operation from being introduced on the number of pieces of the weighed article determined based on the weight of the weighed article in each weighing device. Therefore, the counting of the weighed article can be performed accurately.

The number of pieces of the weighed article having the resultant maximum value, y, of input error in terms of percentage in the large or small input weighing device equal to 1 in the conversion by the number of pieces of the weighed article may be expressed by such an example that if the input error, x, spans the range of $\pm 1\%$ in the corresponding weighing device, then the y is 100.

An invention as defined in claim 4 provides a combinational weighing apparatus for performing a method comprising the steps of: supplying a weighed article to a plurality of weighing devices; weighing the weighed article received in the respective weighing devices by using themselves, respectively; subsequently selecting a combination of the weighing devices so that a total weight of the weighed article supplied into the selected weighing devices may yield an optimal weight that is most proximal to a target weight value for the combinational weighing; and collecting each specific quantity of the weighed article in the selected weighing devices together, in which said plurality of weighing devices comprises: one or more large input weighing device(s) adapted to receive an input of the weighed article in such a quantity which causes a maximum input weight including a variation part in the input weight of the weighed article to be smaller relative to the target weight value for the combinational weighing; and a plurality of small input weighing devices, each adapted to receive an input of the weighed article in such a quantity that is smaller in weight than that of the weighed article to be introduced into the large input weighing device and also smaller in weight than a value determined by subtracting the weight of the weighed article for the one or more large input weighing device(s) from the target weight value for the combinational weighing.

According to the invention as defined in claim 4, after the weighing of the weighed article by the large and the small input weighing devices having been carried out, the combination of the weighing devices is selected such that the total weight of the weighed article supplied to respective selected weighing devices can yield the optimal weight. In this step, at least one large input weighing device is selected without any exception. This means that the procedure is intended to reduce the target weight value by previously subtracting a large quantity of the weighed article from the target weight value. If the target weight value is reduced, the quantity of the weighed article subject to, for example, the equally dividing operation by using the plurality of small input weighing devices could be reduced proportionally by just that much. If each of the weighing devices has the same level of weighing precision one another, more advantageously, the variation in the input weight of the weighed article could be smaller as compared to the case according to the conventional practice where the target weight value has been simply divided equally. Consequently, the precision of the combinational weighing of the weighed article can be improved.

An invention as defined in claim 5 provides a combinational counting apparatus for providing a target number of pieces of weighed article for the combinational counting by performing a method comprising the steps of: supplying a weighed article to a plurality of weighing devices; weighing the weighed article received in the respective weighing devices by using themselves; subsequently selecting a combination of the weighing devices so that a total weight of the weighed article supplied into the selected weighing devices may yield an optimal weight that is most proximal to a target weight value corresponding to a target number value for the combinational counting; and collecting each specific quantity of the weighed article in the selected weighing devices together, in which said plurality of weighing devices comprises: one or more large input weighing device(s) adapted to receive an input of the weighed article in such a quantity that causes a maximum input weight including a variation part in the input weight of the weighed article to be smaller relative to the target weight value corresponding to the target number of pieces of the weighed article; and a plurality of small input weighing devices, each adapted to receive an input of the weighed article in such a quantity that is smaller in weight than that of the weighed article to be introduced into the large input weighing device and also smaller in weight than a value determined by subtracting the weight of the weighed article for the one or more large input weighing device (s) from the target weight value.

According to the invention as defined in claim 5, after the weighing of the weighed article by the large and the small input weighing devices having been carried out, the combination of the weighing devices is selected such that the total weight of the weighed article supplied to respective selected weighing devices can yield the optimal weight. In this step, at least one large input weighing device is selected without any exception. This means that the procedure is intended to reduce the target weight value by previously subtracting a large quantity of the weighed article from the target weight value. If the target weight value is reduced, the quantity of the weighed article subject to, for example, the equally dividing operation by using the plurality of small input weighing devices could be reduced proportionally by just that much. If each of the weighing devices has the same level of weighing precision one another, more advantageously, the variation of the input weight of the weighed article could be smaller as compared to the case according to the conventional practice where the target weight value has been simply divided equally. Consequently, the precision of the combinational weighing of the weighed article can be improved.

The invention as defined in claim 6 provides a combinational counting apparatus in accordance with claim 5, in which each number of pieces of the weighed article to be introduced into the large input weighing device and the small input weighing device, respectively, is such a number which causes a maximum value of input error in the corresponding large or small input weighing device to be smaller than 1(one piece) when the input error is expressed in the following equation of conversion by the number of pieces of the weighed article. $y=1/x$. In the equation, the "y" represents the number of pieces of the weighed article which causes the maximum value of input error in terms of percentage in the large or the small input weighing device to be equal to 1 in the conversion by the number of pieces of the weighed article; and the "x" represents the input error of the weighed article in terms of percentage in the large or the small input weighing device.

According to the invention as defined in claim 6, to introduce the weighed article to the large and the small input weighing devices, the introduction of the weighed article is only permitted with the number of pieces which yields the maximum value of the input error smaller than 1 when the input error of the each weighing device is expressed in the conversion by the number of pieces of the weighed article. This prevents any errors by the weighing operation from being introduced on the number of pieces of the weighed article determined based on the weight of the weighed article in each weighing device. Therefore, the counting of the weighed article can be performed accurately.

**Effect of the invention**

According to the inventions as defined in claims 1 and 4, since at least one large input weighing device is selected without any exception, therefore the target weight value can be substantially reduced. Consequently, the equally dividing of the weighed article, for example, may be performed on thus reduced target weight value by a plurality of small input weighing devices. This can consequently improve the precision of the combinational weighing of the weighed article.

According to the inventions as defined in claims 2 and 5, since the large input weighing device is selected in the selecting step without any exception, therefore the target weight value can be substantially reduced and accordingly, the equally dividing of the weighed article, for example, may be performed on thus reduced target weight value by a plurality of small input weighing devices. This can consequently improve the precision of the combinational counting of the weighed article.

Specifically, according to the inventions as defined in claims 3 and 6, when the weighed article is introduced into the large and the small input weighing devices, the introduction of the weighed article is only permitted with the number of pieces which yields the maximum value of the input error smaller than 1 when the input error of the each weighing device is expressed in the conversion by the number of pieces of the weighed article. Consequently, this prevents any errors by the weighing operation from being introduced on the number of pieces of the weighed article determined from the weight of the weighed article in each weighing device. Therefore, the counting of the weighed article can be performed accurately.

**BRIEF DESCRIPTION OF THE DRAWINGS**

Fig. 1 is a side elevational view of a combinational weighing apparatus according to a first embodiment of the present invention;

Fig. 2 is a longitudinal sectional view of a front part of a combinational weighing apparatus according to the first embodiment of the present invention;

Fig. 3 is a front view of a combinational weighing apparatus according to the first embodiment of the present invention as shown with a front panel and a collecting chute that have been removed;

Fig. 4 is an enlarged sectional view of main components, illustrating a pipe feeder and its peripheral region of a combinational weighing apparatus according to the first embodiment of the present invention; and

Fig. 5 is a block diagram showing a control circuit of a combinational weighing apparatus according the first embodiment of the present invention.

**Description of reference numerals**

10      Combinational weighing apparatus
10A     Combinational counting apparatus
16      Weighing device
16A     Large input weighing device
16B     Small input weighing device

**DESCRIPTION OF THE PREFERRED EMBODIMENTS**

Preferred embodiments of the present invention will now be described with reference to the attached drawings.

It is to be noted for convenience of explanation that in the drawings, X1 direction refers to the forward direction with respect to a combinational weighing apparatus, X2 refers to the rearward direction, Y1 refers to the rightward direction, Y2 refers to the leftward direction, Z1 refers to the upward direction and Z2 refers to the downward direction, respectively, with respect to the apparatus. The description is herein given on a combinational weighing technique in packing 100g of corn flakes as an example.

**Embodiment 1**

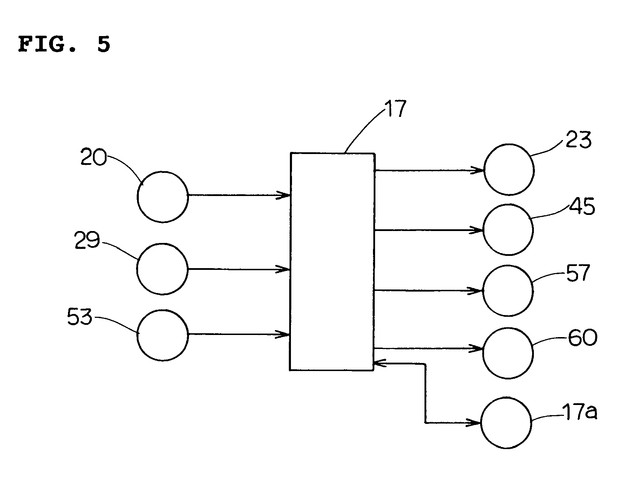

In the drawings, reference numeral 10 designates a combinational weighing apparatus according to a first embodiment of the present invention, which comprises: an outer casing 11; an upper hopper 12 disposed in an upper location of the outer casing 11 for storing a predetermined quantity of corn flakes (weighed article); a dispenser 13 disposed in a discharge port of the upper hopper 12 and adapted to dispense a certain quantity of corn flakes per unit time; a lower hopper 14 disposed immediately below the discharge port of the upper hopper 12 for receiving the corn flakes discharged from the dispenser 13; a set of five pipe feeders 15 disposed substantially horizontally in a lower end portion of the lower hopper 14; a set of two large input weighing devices 16A and three small input weighing devices 16B, each weighing devices disposed immediately below the discharge port of each pipe feeder 15 for receiving the corn flakes discharged from each pipe feeder for weighing thereof; a control section 17 having a selecting circuit 17a (Fig. 5) adapted to select a specific combination of the weighing devices 16A and 16B so that a total weight of the corn flakes supplied to respective weighing devices 16A and 16B can yield an optimal weight that is most proximal to the target weight value of the combinational weighing; and a collecting chute 18 for collecting the corn flakes received in the selected weighing devices 16A and 16B.

Each of those components will now be described in detail.

The outer casing 11 defines a rectangular box in plan view elongated along the X1-X2 direction and has a lower box 19 in a lower portion for accommodating the control section 17 therein. The upper hopper 12 is fixed to an upper end portion of the outer casing 11 in the X2 side. The upper hopper 12 is a hopper made of metal and elongated along the Y1-Y2 direction and includes an upper optical sensor 20 disposed in an upper portion of a side panel of the upper hopper 12 for detecting that a full level of the corn flakes has been reached.

The dispenser 13 has a rotary shaft 21 mounted laterally in an interior space of the discharge port of the upper hopper 12, three stirring vanes 22 disposed radially on an outer surface of the rotary shaft 21 for stirring the corn flakes 11 and a dispenser motor 23 fixed to a lower end portion of a rear plate of the upper hopper 12 via a bracket. The rotary shaft 21 protrudes outward from one of the side panels of the upper hopper 12 and a pulley 24 is fixedly attached to this protruded section of the shaft. A pulley 25 is also fixedly attached to an output shaft of the dispenser motor 23. A belt 26 extends across the both pulleys 24 and 25, and the pulleys 24 and 25 are rotated by the dispenser motor 23, which in turn rotates the stirring vanes 22 so as to dispense the corn flakes 11 contained in the upper hopper 12 at a rate of 500g per minute. The stirring vanes 22 may be omitted depending on the property of material.

The lower hopper 14 is a smaller hopper having a smaller volume than the upper hopper 12 and extending in the Y1-Y2 direction, in which a lower end portion of the lower hopper 14 is fixedly attached onto an X2 side end portion of a stationary base plate 27 extending in the Y1-Y2 direction. The lower end portion of the upper hopper 12 is fixedly attached with an upper end portion of a small dropping chute 28 allowing for the dispensed corn flakes to drop into the lower hopper 14. A lower optical sensor 29 is disposed in an upper portion of a side panel of the lower hopper 14 for detecting that a full level of the corn flakes has been reached.

Respective support posts 30 are disposed upright on a top plate of the lower box 19 near a middle of the X1-X2 direction and in both ends of the Y1-Y2 direction of the top plate. A connecting shaft 31 is mounted laterally to bridge between upper end portions of the support posts 30 with its axial direction in conformity with the Y1-Y2 direction. A pair of bearings 32 protruding from an under surface of the stationary base plate 27 in both corner portions defined in the X1 side is fitted over the both end portions of the connecting shaft 31. A single tilt angle adjusting structure 33 for adjusting a tilt angle of the stationary base plate 27 is disposed vertically on a top plate of the lower box 19 in a middle portion of the plate in the Y1-Y2 direction and also in a substantially middle portion of the plate in the X1-X2 direction located in the X2 side from the both support posts 30.

The tilt angle adjusting structure 33 has a thick mounting plate 34 extending in the Y1-Y2 direction, which is fixedly attached to the top plate on an upper surface side, a height adjusting bolt 35 having a large diameter and adapted to extend upward (in the Z1 direction) through a bolt hole formed in the mounting plate 34 in its intermediate portion with respect to the longitudinal direction, and a tilt angle adjusting post 36 having an internal threaded section extending from a lower end surface to the vicinity of an upper end portion for thread-engaging with a height adjusting bolt 35. A pin hole is formed in an upper end portion of the tilt angle adjusting post 36, which is extending in the Y1-Y2 direction.

A pair of brackets 37 are attached with a certain space placed therebetween to the stationary base plate 27 on an under surface side at a location rather closer to the X2 side than the middle portion of the base plate 27 in the X1-X2 direction and also in the middle of the base plate 27 in its longitudinal Y1-Y2 direction. A decrescent elongated hole 37a is formed in each of the brackets 37. The tilt angle adjusting post 36 and the stationary base plate 27 are pivotally connected with each other by placing the upper end portion of the tilt angle adjusting post 36 between the both brackets 37 with a short pin 38 inserted through the both elongated holes 37a and the pin holes of the tilt angle adjusting post 36.

As the height adjusting bolt 35 is turned toward the low position for adjustment, the threading engagement of the tilt angle adjusting post 36 with the height adjusting bolt 35 proceeds gradually so as to lower the tilt angle adjusting post 36 gradually. This causes an end portion of the stationary base plate 27 in the X2 side to rotate downward around said short pin 38 within the vertical plane and consequently a tip portion (downstream portion) of each pipe feeder 15 to tilt upward within the vertical plane. On the other hand, as the height adjusting bolt 35 is turned toward the high position for adjustment, the threading disengagement of the angle adjusting post 36 from the height adjusting bolt 35 proceeds gradually so as to raise the tilt angle adjusting post 36 gradually. This causes the end portion of the stationary base plate 27 in the X2 side to rotate upward around said short pin 38 within the vertical plane and consequently the tip portion of each pipe feeder 15 to tilt downward within the vertical plane. If the weighed article subject to the combinational weighing is corn flakes, the tilt angle of each pipe feeder 15 is around a range of 1° to 10°, preferably 2° to 5°, with respect to a horizontal line. It is to be noted that the tilt angle may be changed as desired, depending on the material or nature of the weighed article.

A set of totally five pipe feeders axially aligned with the Y1-Y2 direction is disposed on the stationary base plate 27 with a certain pitch between adjacent feeders in the Y1-Y2 direction. Each pipe feeder 15 is housed in an interior space of a gate type casing 39 extending upright from both end portions of the stationary base plate 27 in the Y1-Y2 direction. Each side panel of the gate type casing 39 is fixed to the upper hopper 12 through a protruding piece 39a. Each pipe feeder 15 comprises an outer cylinder 40, an inner cylinder 41 that is longer than the outer cylinder 40 and slidably inserted in the outer cylinder 40, and a rotary mechanism 42 for rotating the outer cylinder 40 in a circumferential direction. Two of the five pipe feeders 15 define large feeders 15A, each having a diameter of 100mm, and the other three feeders define small feeders 15B, each having a diameter of 50mm. Two large feeders 15A are identical to each other in the shape, size and rotary mechanism 42. Further, the small feeder 15B is configured similarly to the large feeder 15A including the rotary mechanism 42, except that the outer 40 and the inner 41 cylinders, respectively, have smaller diameters than those of the large feeder 15A. Therefore, the description is only given on one of the large feeders 15A but the description of the other large feeder 15A and the small feeders 15B should be herein omitted.

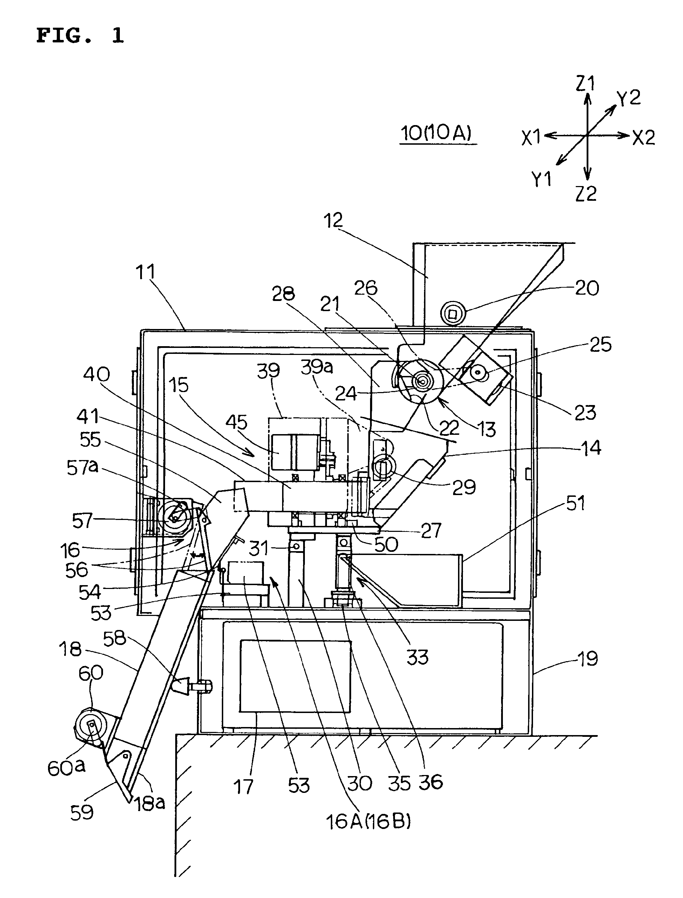

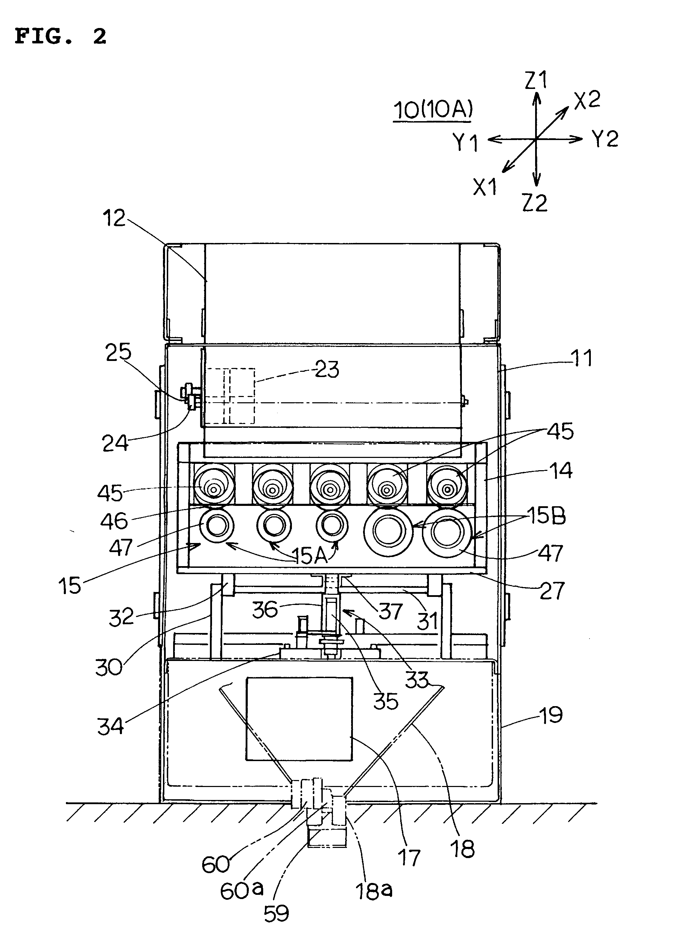

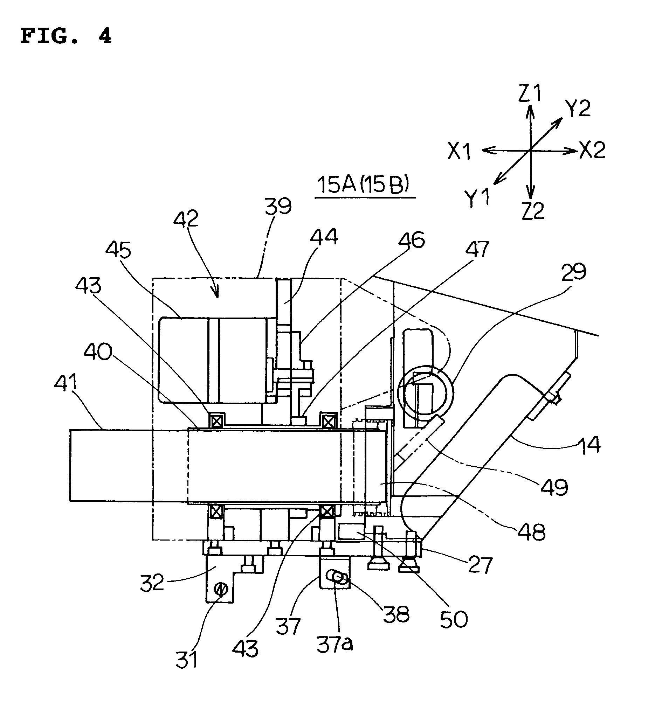

As shown in Figs. 1, 2 and 4, the both end portions of the outer cylinder 40 are mounted on the stationary base plate 27 via a pair of bearings 43 in such a manner that the outer cylinder 40 can rotate in the circumferential direction. A circumferentially driving motor 45 is securely mounted in an upper space within said gate type casing 39 via a thick partition 44 whose upper end is fixed to an inner surface of the top plate of the gate type housing 39. A gear having a large diameter 46 is fixedly fitted to a tip portion of a substantially horizontal output shaft of the circumferentially driving motor 45. An annular outer gear wheel 47 to be engaged with the gear 46 is externally fitted to make a rigid mating with an outer surface of the outer cylinder 40 in the middle portion along the length of the outer cylinder 40. The inner cylinder 41 having a diameter that is slightly smaller than a bore of the outer cylinder 40 and a length as 1.5 times long as the outer cylinder 40 is slidably inserted into the outer cylinder 40.

As the outer cylinder 40 is rotated (circumferentially) by the circumferentially driving motor 45 via the gear 46 and the outer gearwheel 47, the inner cylinder 41 is rotated together in association with the rotating outer cylinder 40. An impeller 48 is attached by thread to the outer cylinder 40 in its root portion side (the lower hopper 14 side) for breaking a mass of corn flakes into discrete flakes, which have been once introduced into the lower hopper 14 and then aggregated due to its own weight. The impeller 48 is a thick ring made of plastic. A stirring stick 49 protrudes diagonally from a part of an end surface of the impeller 48 in the X2 side. As the outer cylinder 40 rotates in the circumferential direction, the stirring stick 49 of the impeller 48 is also rotated, which in turn breaks a lower volume of the corn flakes which have been once introduced into the lower hopper 14 and then aggregated into a mass. A small fragment receiving vessel 50 is disposed on the stationary base plate 27 at a location immediately below the impeller 48 for receiving powders of corn flakes escaped from a gap between an end portion of the impeller 48 in the X1 side and the outer cylinder 40. A large fragment receiving vessel 51 is disposed on the lower box 19 at a location immediately below the small fragment receiving vessel 50 for receiving the corn flakes dropped from the lower hopper 14.

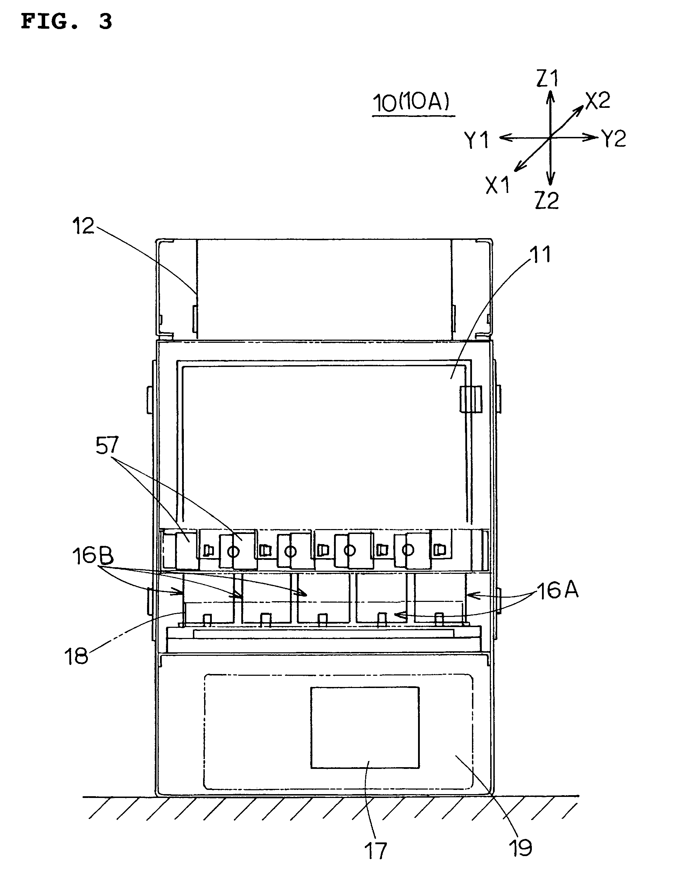

A configuration of said large input weighing device 16A and small input weighing device 16B will now be described in detail with reference to Figs. 1 and 3. Each one of the two large input weighing devices 16A receives an input of a certain amount of input corn flakes (90g) in such a quantity that the maximum input weight (90.9g) including the variation part ($\pm$1%) of the input weight of the corn flakes will be smaller as compared to the target weight value (100g) of the combinational weighing. In addition, each one of the three small input weighing devices 16B receives another amount of input corn flakes (5g) in such a quantity that the input weight is smaller than the weight (90g) of the corn flakes to be introduced into the large input weighing device and also smaller than the value (10g) determined by subtracting the weight (90g) of the corn flakes per a single large input weighing device 16A from the target weight value (100g) for the combinational weighing. The small input weighing device 16B is similar to the large input weighing device 16A with a difference that the former has a smaller volume of the weighing hopper 55 as compared to the latter. The variation range of the input weight of the corn flakes in the small input weighing device is also $\pm 1\%$ as is the case with the large input weighing device 16B. Consequently, the description is only made on the large input weighing device 16A but the description of the small input weighing device 16A is omitted.

As shown in Fig. 1, a load cell 53 is securely mounted on an end portion of the top plate of the lower box 19 in the X1 side via a small table 52. A detector element of the load cell 53 is fixedly connected with a lower portion of the weighing hopper 55 via a bracket 54. An opening and closing lid 56 in the vicinity of its upper end portion is pivotally supported by an upper portion of a region defining a discharge port of the weighing hopper 55. Further, a rotary solenoid 57 is fixedly mounted on a substantially middle portion of a front panel of the outer casing 11 in the Z1-Z2 direction. A rod 67a of the rotary solenoid 57 is turned to the lid opening side to thereby push a part of the opening and closing lid 56 extending upward beyond the weighing hopper 55 so that the opening and closing lid 56 may be rotated within a vertical plane for opening the lid. This permits the corn flakes discharged from the weighing hopper 55 to pass through a bulky collecting chute 18 having an inverse isosceles triangle in front view and exit from a discharge port 18a in a lower end of the collecting chute 18. The collecting chute 18 may be divided into two chute sections, one for the large input weighing device 16A and the other for the small input weighing device 16B. For the above configuration, the collecting chute section for the large input weighing device 16A and the collecting chute section for the small input weighing device may be disposed in parallel or may be located oppositely to each other.
The large input weighing device 16A is mainly composed of those components including the load cell 53 , the weighing hopper 55 , the rotary solenoid 57 and the opening and closing lid 56.

The collecting chute 18 is configured such that a tilt angle of the collecting chute 18 can be adjusted by using a tilt angle adjusting projection 58 protruding outward from the front panel of the lower box 19. The tilt angle adjusting projection 58 has its length of protrusion from the front panel made adjustable with the aid of a bolt and nut structure having a double-nut. The tilt angle of the collecting chute 18 can be adjusted appropriately depending on the viscosity, geometry and the like of the weighed article by adjusting the length of the protrusion of the tilt angle adjusting projection 58.
The discharge port 18a of the collecting chute 18 defines a narrow passage. A rotating lid 59 is pivotally supported in an egress located in a lower end of the discharge port 18a, which can rotate within the vertical plane. The rotating lid 59 can be open by the rotating motion of a rod 60a of the rotary solenoid 60 toward the lid opening direction, which solenoid 60 is securely attached to an upper edge of the side panel of the discharge port 18a via a bracket. In the region of egress will be placed a bag, though not shown, used for packing a certain amount of corn flakes which yields the optimal weight that is most proximal to the target weight value or 100g.

A main control circuit of a combinational weighing apparatus 10 will now be described with reference to a block diagram of Fig. 5.
As shown in Fig. 5, an input port of the control section 17 is electrically connected with the upper optical sensor 20, the lower optical sensor 29 and the load cell 53, respectively. In addition, an output port of the control section 17 is electrically connected with the dispenser motor 23, the circumferentially driving motor 45, the two rotary solenoids 57 and 60, and the selecting circuit 17a, respectively.
The control section 17 in receipt of a detection signal from the upper optical sensor 20 sends a command to a stock conveyer to stop the supply of the corn flakes to the upper hopper 12. In addition, the control section 17 in receipt of a detection signal from the lower optical sensor 29 sends a command to the dispenser motor 23 to stop the dispensing operation. Further, when the control section 17 has an acknowledgement based on a weighing signal from each load cell 53 that the corn flakes of predetermined quantity has been introduced into each corresponding weighing hopper 55, the control section 17 dispatches a command to each corresponding circumferentially driving motor 45 to stop the revolution thereof. In response to the command, the input operation of the corn flakes from each corresponding large 15A or small 15B feeder into each weighing hopper 55 will be stopped. Almost simultaneously to the above reaction, the selecting circuit 17a, based on the result of weighing by each load cell 53 , selects the combination of the weighing devices 16 that can yield the optimal weight (e.g., 99.99g) that is most proximal to the target weight value, 100g, for the combinational weighing. Then, the control section 17 actuates the rotary solenoid 57 associated with each selected weighing hopper 55 toward the lid opening side to open the corresponding opening and closing lid 56 to thereby allow the quantity of corn flakes received in each selected weighing hopper 55 to drop into the collecting chute 18. The 99.99g of the corn flakes dropped from the hoppers 55 are collected in the discharge port 18a of the collecting chute 18. Subsequently, the control section 17 actuates the rotary solenoid 60 toward the lid opening side to allow the corn flakes to exit the discharge port and then enter the bag placed immediately below the egress, though not shown.

Turning now to Figs. 1 to 5, the description will now be made on a combinational weighing method of the corn flakes by a combinational weighing apparatus 10 according to the first embodiment of the present invention.
As shown in Figs. 1 to 5, the corn flakes are supplied to the upper hopper 12 by the stock conveyer, though not shown. During the supplying, the control section 17 in receipt of the detection signal from the upper optical sensor 20 sends a command to the stock conveyer to stop the supplying of the corn flakes. By way of this, the supply of the corn flakes to the upper hopper 12 is stopped.

After that, the dispenser motor 23 is actuated to thereby rotate the revolving shaft 21 with the stirring vanes 22 so as to dispense the corn flakes from the discharge port of the upper hopper 12 by 500g per minute. The dispensed corn flakes are introduced into the lower hopper 14 through the dropping chute 28. During this operation, the control section 17 in receipt of the detection signal from the lower optical sensor 29 sends a command to the dispenser motor 23 to stop the dispensing of the corn flakes. By way of this, the dispensing of the corn flakes is stopped.

The corn flakes introduced into the lower hopper 14 tends to form an aggregation of flakes in the bottom of the hopper due to their own weight. However, the rotating motion of the stirring stick 49 in association with the circumferential rotation of the large 15A and the small 15B feeders by respective circumferential driving motor 45 can break the aggregation of the corn flakes. After that, the corn flakes received in the lower hopper 14 are supplied to the two large feeders 15A and the three small feeders 15B, respectively, and then introduced into the corresponding weighing hoppers 55 from the discharge port of the respective feeders. Respective load cells 53 weight the corn flakes received in the corresponding hoppers 55.

During this operation, 90g of the corn flakes are introduced into each one of the weighing hoppers 55 of the two large input weighing devices 16A. Also, 5g of the corn flakes are introduced into each of the weighing hoppers 55 of the three small input weighing devices 16B.

As the control section 17 acknowledges based on the weighing signal from each load cell 53 that the corn flakes of predetermined weight has been introduced into each corresponding weighing hopper 55, the control section 17 sends a command to the corresponding circumferentially driving motor 45 to stop the revolutions thereof.

By way of this, the introduction of the corn flakes into each weighing hopper 55 from the corresponding large 15A or small 15B feeder is stopped.

Subsequently, the specific combination of the weighing devices 16 is selected so as to yield the resultant total weight of the corn flakes supplied to the weighing hoppers 55 of the selected one of the two large input weighing devices 16A and the weighing hoppers 55 of the selected two of the three small input weighing devices 16B, respectively, that represents the optimal weight (e.g. , 99.99g) most proximal to the target weight (100g).

During this operation, one of the two large input weighing devices 16A is selected without any exception. For the rest of the selected weighing devices, two of the three small input weighing devices 16B are selected. In this way, the fact that the one large input weighing device 16A must be selected means that the reducing of the target weight value (reduction to 10g) is carried out by subtracting previously the 90g of corn flakes received in the weighing hopper 55 of the large input weighing device 16A from the target weight value (100g).

If the target weight value is reduced to a value as small as 10g, the weight of the corn flakes to be divided equally into 5g by using the two small input weighing devices 16B could be smaller than the input weight (33g) of the corn flakes to be introduced into each weighing hopper 55 in the case of the conventional practice

where the 100g of corn flakes are divided equally by using three weighing devices. In addition, if the weighing precision of the existing weighing device marks ±1%, the same ratio as of the weighing device 16A, 16B of the first embodiment, the variation range in the input weight of the corn flakes could be also reduced as compared to the conventional practice where the target weight value 100g has been simply divided equally by three. Consequently, the precision of the combinational weighing of the corn flakes can be improved.

**Embodiment 2**

With reference to Figs. 1 to 5, the combinational counting method of tablets of drugs (weighed article) will now be described by using the combinational counting apparatus 10A having the same structure as the combinational weighing apparatus 10 of the first embodiment. The description herein takes as an example a method for packing 100 tablets (100g) in a single bag, each tablet weighing 1g.

A weighing hopper 55 of each large input weighing device 16A receives an input of a certain pieces of tablets having a specific weight (90g) in such a quantity that causes a maximum input weight (90.9g) including a variation part (±1%) in the input weight of the tablets to be smaller than the target weight value (100g) corresponding to the target number value (100 tablets). In addition, a weighing hopper 55 of each small input weighing device 16B receives an input of a certain pieces of tablets having a specific weight (5g) in such a quantity that is smaller than the weight of tablets introduced into the large input weighing device 16A and also smaller than a value (10g) determined by subtracting the weight (90g) of the tablets for one large input weighing device 16A from the target weight value (100g).

As shown in Figs. 1 to 5, the tablets are supplied to the upper hopper 12 by the stock conveyer, though not shown. During supplying, the control section 17 in receipt of the detection signal from the upper optical sensor 20 sends the command to the stock conveyer to stop the supplying of the tablets to the upper hopper 12. By way of this, the supply of the tablets to the upper hopper 12 is stopped.

For further handling the tablets supplied to the upper hopper 12, the dispenser motor 23 is driven to thereby rotate the rotary shaft 21 having the stirring vanes 22 so as to dispense the tablets from the discharge port of the upper hopper 12 at a rate of 500g per minute. The dispensed tablets are introduced into the lower hopper 14 through the dropping chute 28. During this operation, the control section 17 in receipt of the detection signal from the lower optical sensor 29 sends a command to the dispenser motor 23 to stop the dispensing of the tablets. Byway of this, the dispensing of the tablets is stopped.

The tablets introduced into the lower hopper 14 are dispensed through the rotating motion of the stirring stick 49 of the impeller 48 in association with the circumferential rotation of the large 15A and the small 15b feeders driven by respective circumferentially driving motors 45 , and then supplied to two large feeders 15A and three small feeders 15B, respectively. Subsequently, the tablets are introduced into the weighing hopper 55 from the discharge ports of corresponding pipe feeders 15, where respective road cells 53 weigh the tablets received in the corresponding weighing hopper 55.

During this operation, 90g of the tablets are introduced into each one of the weighing hoppers 55 of the two large input weighing devices 16A. Also, 5g of the tablets are introduced into each one of the weighing hoppers 55 of the three small input weighing devices 16B.

As the control section 17 acknowledges based on the weighing signal from each load cell 53 that the tablets of predetermined weight has been introduced into each corresponding weighing hopper 55, the control section 17 sends a command to the corresponding circumferentially driving motor 45 to stop the revolutions thereof. By way of this, the introduction of the tablets into each weighing hopper 55 from the corresponding large 15A or small 15B feeder is stopped.

Subsequently, the specific combination of the weighing devices 16 is selected so as to yield the resultant total weight of the tablets supplied to the weighing hopper 55 of the selected one of the two large input weighing devices 16A and the weighing hoppers 55 of the selected two of the three small input weighing devices 16B, respectively, that represents the optimal weight (e.g., 99.99g) most proximal to the target weight (100g).

During this operation, one of the two large input weighing devices 16A is selected without any exception. For the rest of the selected weighing devices, two of the three small input weighing devices 16B are selected. The fact that the one large input weighing device 16A must be selected means that the reducing of the target weight value (reduction to 10g) is carried out by subtracting previously the 90g of tablets received in the weighing hopper 55 of the large input weighing device 16A from the target weight value (100g).

If the target weight value is reduced to a value as small as 10g, the weight of the tablets to be divided equally into 5g by using the two small input weighing devices could be smaller than the input weight (33g) of the tablets to be introduced into each weighing hopper 55 in the case of the conventional practice where the 100g of tablets are divided equally by using three weighing devices. In addition, if the weighing precision of the weighing device marks $\pm 1\%$, the same ratio as of the weighing device of the conventional type, the variation range in the input weight of the tablets could be also reduced as compared to the conventional practice where the target weight value 100g has been simply divided equally by three. Consequently, the precision of the combinational counting of the tablets can be improved.

Further, the number of pieces of tablets to be introduced into the large 16A and the small 16B input weighing devices , respectively, may be set to such a quantity which causes the maximum value of the input error in the corresponding weighing device 16 to be smaller than 1, when the input error is expressed in the following formula of conversion by the number of tablet;

$$y=1/x \qquad\qquad \cdots(1)$$

where, the "y" represents the number of tablets which causes the maximum value (+1%) of input error in terms of percentage in the large 16A or small 16B input weighing device to be equal to 1 in the conversion by the number of tablets, and the "x" represents the input error ($\pm 1\%$) of the tablets in terms of percentage in the large 16A or the small 16B input weighing device.

Specifically, if the input error of the large input weighing device 16A is ($\pm 1\%$), the y is 1/0.01=100.

As described above, when the tablets are introduced into the large input weighing device 16A and the small input weighing device 16B, the apparatus only permits the introduction of the number of tablets that can yield the maximum value of the input error smaller than 1, when the input error in respective weighing devices 16A and 16B is expressed by the value induced from the conversion by the number of tablets. If the target input number exceeds the above value, the total number of tablets may be divided into two or more inputs for introduction to the weighing devices 16A, 16B. This eliminates any errors in the weighing operation over the number of tablets determined from the weight of the tablets. Therefore, more accurate counting of the tablets can be provided.

**Claims**

1. A combinational weighing method comprising:

a supplying step for supplying a weighed article to one or more large input weighing device (s) and a plurality of small input weighing devices, respectively, wherein each of said one or more large input weighing device(s) receives an input of said weighed article in such a quantity that a maximum input weight including a variation part in the input weight of said weighed article is smaller relative to a target weight value for combinational weighing and wherein each of said plurality of small input weighing devices receives an each input of said weighed article in such a quantity that an input weight is smaller than that of said weighed article to be introduced into said large input weighing device and also smaller than a value determined by subtracting the weight of said weighed article for said one or more large input weighing device(s) from said target weight value for the combinational weighing;

a weighing step for weighing said input weighed article received in each of said large and said small input weighing devices by using themselves, respectively;

a selecting step for selecting a combination of said weighing devices so that a total weight of said weighed article supplied into the selected ones among said plurality of small input weighing devices and the selected one(s) among said at least one large input weighing device, respectively, yields an optimal weight that is most proximal to said target weight value; and

a collecting step for collecting each specific quantity of said weighed article in said selected weighing devices together.

2. A combinational counting method comprising:

a supplying step for supplying a weighed article to one or more large input weighing device (s) and a plurality of small input weighing devices, respectively, said weighed article being a solid material having a quantified weight, wherein each of said one or more large input weighing device (s) receives an input of said weighed article in such a quantity that a maximum input weight including a variation part in the input weight of said weighed article is smaller relative to a target weight value corresponding to a target number value in a combinational counting operation and wherein each of said plurality of small input weighing devices receives an each input of said weighed article in such a quantity that an input weight is smaller than that of said weighed article to be introduced into said large input weighing device and also smaller than a value determined by subtracting the weight of said weighed article for said one or more large input weighing device(s) from said target weight value;

a weighing step for weighing said input weighed article received in each of said large and said small input weighing devices by using themselves, respectively;

a selecting step for selecting a combination of said weighing devices so that a total weight of said weighed article supplied into the selected ones among said plurality of small input weighing devices and the selected one(s) among said at least one large input weighing device, respectively, yields an optimal weight that is most proximal to said target weight value; and

a collecting step for collecting each specific quantity of said weighed article in said selected weighing devices together to yield a target number of pieces of said weighed article.

3. A combinational counting method in accordance with claim 2, in which each number of pieces of said weighed article to be introduced into said large input weighing device and said small input weighing devices, respectively, is such a number which causes a maximum value of input error in said corresponding large or small input weighing device to be smaller than 1(one piece) when said input error is expressed in the following equation of conversion by the number of pieces of said weighed article:

$$y = 1/x$$

wherein, the "y" represents the number of pieces of said weighed article which causes a maximum value of input error in terms of percentage in said large or said small input weighing device to be equal to 1 in the conversion by the number of pieces of said weighed article; and

the "x" represents the input error of said weighed article in terms of percentage in said large or said small input weighing device.

4. A combinational weighing apparatus for performing a method comprising the steps of: supplying a weighed article to a plurality of weighing devices; weighing said weighed article received in each of said weighing devices by using themselves, respectively; subsequently selecting a combination of said weighing devices so that a total weight of said weighed article supplied into the selected weighing devices yields an optimal weight that is most proximal to a target weight value for the combinational weighing; and collecting each specific quantity of said weighed article in said selected weighing devices together, in which
said weighing devices comprise:

one or more large input weighing device (s) adapted to receive an input of said weighed article in such a quantity which causes a maximum input weight including a variation part in the input weight of said weighed article to be smaller relative to said target weight value for the combinational weighing; and
a plurality of small input weighing devices each adapted to receive an input of said weighed article in such a quantity that is smaller in weight than that of said weighed article to be introduced into said large input weighing device and also smaller in weight than a value determined by subtracting the weight of said weighed article for said one or more large input weighing device(s) from said target weight value for the combinational weighing.

5. A combinational counting apparatus for providing a target number of pieces of weighed article for the combinational counting by performing a method comprising the steps of: supplying a weighed article to a plurality of weighing devices ; weighing said weighed article received in each of said weighing devices by using themselves ; subsequently selecting a combination of said weighing devices so that a total weight of said weighed article supplied into the selected weighing devices yields an optimal weight that is most proximal to a target weight value corresponding to a target number value for said combinational counting; and collecting each specific quantity of said weighed article in said selected weighing devices together to, in which
said plurality of weighing devices comprise:

one or more large input weighing device (s) adapted to receive an input of said weighed article in such a quantity that causes a maximum input weight including a variation part in the input weight of said weighed article to be smaller relative to said target weight value corresponding to said target number of pieces of said weighed article; and
a plurality of small input weighing devices, each adapted to receive an input of said weighed article in such a quantity that is smaller in weight than that of said weighed article to be introduced into said large input weighing device and also smaller in weight than a value determined by subtracting the weight of said weighed article for said one or more large input weighing device(s) from said target weight value.

6. A combinational counting apparatus in accordance with claim 5, in which each number of pieces of said weighed article to be introduced into said large input weighing devices and said small input weighing devices, respectively, is such a number which causes a maximum value of input error in said corresponding large or small input weighing device to be smaller than 1 (one piece) when the input error is expressed in the following equation of conversion by the number of pieces said weighed article:

$$y = 1/x$$

wherein, the "y" represents the number of pieces of said weighed article which causes said maximum value of input error in terms of percentage in said large or said small input weighing device to be equal to 1 in the conversion by the number of pieces of said weighed article; and
the "x" represents the input error of said weighed article in terms of percentage in said large or said small input weighing device.

# FIG. 1

## FIG. 2

FIG. 3

10(10A)

FIG. 4

FIG. 5

<table>
<tr><td colspan="2" align="center"><strong>INTERNATIONAL SEARCH REPORT</strong></td><td colspan="2">International application No.<br>PCT/JP2004/009422</td></tr>
</table>

**A. CLASSIFICATION OF SUBJECT MATTER**
    Int.Cl⁷ G01G19/387

According to International Patent Classification (IPC) or to both national classification and IPC

**B. FIELDS SEARCHED**

Minimum documentation searched (classification system followed by classification symbols)
    Int.Cl⁷ G01G19/387

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 8-278189 A (Daiwa Seiko Kabushiki Kaisha),<br>22 October, 1996 (22.10.96),<br>Full text; all drawings<br>& EP 736754 B1    & US 5910646 A1 | 1-6 |

☐ Further documents are listed in the continuation of Box C.      ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    14 July, 2004 (14.07.04) | Date of mailing of the international search report<br>    27 July, 2004 (27.07.04) |
|---|---|
| Name and mailing address of the ISA/<br>    Japanese Patent Office | Authorized officer |
| Facsimile No. | Telephone No. |

Form PCT/ISA/210 (second sheet) (January 2004)

**EP 1 764 592 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0579889 A